# EUROPEAN PATENT APPLICATION

(11) **EP 4 461 476 A1**
(43) Date of publication of application: **13.11.2024**
(21) Application number: 24172392.3
(22) Date of filing: 25.04.2024
(51) Int. Cl.: B25J 9/16

(54) **OPERATING DEVICE AND PROGRAM**

(30) Priority: 27.04.2023 JP 2023073124
(71) Applicant: DENSO WAVE INCORPORATED, Chita-gun, Aichi-pref. 470-2297 (JP)
(72) Inventor: TERASHITA, Shogo, Chita-gun, Aichi-pref., 470-2297 (JP)
(74) Representative: Winter, Brandl - Partnerschaft mbB

(57) **Abstract**

An operating device (40) is connected to a robot (20) including a monitoring function that stops the robot in a case where an operating speed of the robot exceeds an upper speed limit value. The robot is controlled by a human. The operating device includes: a display (41) that displays an image; a determination section (45) that determines whether a second pollution degree that is a pollution degree of an environment in which the robot has been used is higher than a first pollution degree that is a pollution degree set for the robot; a first notification section (46) that causes the display to display an image indicating a procedure for confirming whether the monitoring function is working normally, in a case where the second pollution degree is determined to be higher than the first pollution degree; and a second notification section (47) that acquires from the robot a result of an operation of the robot directed according to the procedure, and, on the basis of the operation result acquired, causes the display to display an image indicating whether the monitoring function is working normally.

## Description

### [Technical Field]

The present disclosure relates to an operating device and a program.

### [Background Art]

In a teaching operation of teaching an operation of a manipulator (for example, an industrial robot) using a teaching device, there is a robot apparatus that operates as follows. The robot apparatus operates, among a plurality of joints, a joint whose confirmation operation has been performed, at a usual speed, and a joint whose confirmation operation has not been performed, at a safe speed or lower set on the basis of the usual speed (see JP 6381203 B).

### [Summary of the Invention]

A robot may include an operating speed monitoring function that generates an error and thus stops the robot when the operating speed exceeds an upper speed limit value. The robot is easily carried and may be used by a user who is not familiar with robots. Therefore, the robot may be used in an environment with a pollution degree higher than the pollution degree of an environment in which the robot is expected to be used. That is, the operating speed monitoring function of the robot may possibly be fail. Operating the robot with the monitoring function having failed is not preferable in terms of safety.

The present disclosure has been made in order to solve such a problem, and mainly intended to prevent a robot, which is controlled by a human, from being operated with the safety of the robot lowered, after the robot is used in an environment with a pollution degree higher than the pollution degree of an environment in which the robot is expected to be used.

An operating device (40), according to one embodiment of the present disclosure, is connected to a robot (20) including a monitoring function that stops the robot in a case where an operating speed of the robot exceeds an upper speed limit value, the robot is controlled by a human, and the operating device includes: a display (41) that displays an image; a determination section (45) that determines whether a second pollution degree that is a pollution degree of an environment in which the robot has been used is higher than a first pollution degree that is a pollution degree set for the robot; a first notification section (46) that causes the display to display an image indicating a procedure for confirming whether the monitoring function is working normally, in a case where the second pollution degree is determined to be higher than the first pollution degree; and a second notification section (47) that acquires from the robot a result of an operation of the robot directed according to the procedure, and, on the basis of the operation result acquired, causes the display to display an image indicating whether the monitoring function is working normally.

A program, according to one embodiment of the present disclosure, is a program of a computer connected to a robot (20) including a monitoring function that stops the robot in a case where an operating speed of the robot exceeds an upper speed limit value, the robot is controlled by a human, and the program causes the computer to execute: determining whether a second pollution degree that is a pollution degree of an environment in which the robot has been used is higher than a first pollution degree that is a pollution degree set for the robot; causing a display (41) to display an image indicating a procedure for confirming whether the monitoring function is working normally, in a case where the second pollution degree is determined to be higher than the first pollution degree; acquiring from the robot a result of an operation of the robot directed according to the procedure; and, on the basis of the operation result acquired, causing the display to display an image indicating whether the monitoring function is working normally.

### [Brief Description of the Drawings]

Fig. 1 is a schematic view of a primary-secondary robot system.
Fig. 2 is a block diagram illustrating a functional configuration of an operating device.
Fig. 3 is an image for enabling a primary-secondary robot function.
Fig. 4 is an image indicating that the primary-secondary robot function has been enabled.
Fig. 5A and 5B is flowcharts illustrating processing of the operating device.
Fig. 6 is an image for disabling the primary-secondary robot function.
Fig. 7 is an image directing the operation confirmation of an emergency stop function.
Fig. 8 is an image indicating a procedure for the operation confirmation of the emergency stop function.
Fig. 9 is an image indicating an error of the emergency stop function.
Fig. 10 is an image indicating that the emergency stop function is working normally.
Fig. 11 is an image directing the operation confirmation of an SLS function.
Fig. 12 is an image indicating a procedure for setting an SLS value.
Fig. 13 is an image directing a manual operation, at which axes is operated one by one, in the operation confirmation of the SLS function.
Fig. 14 is an image indicating an error of the SLS function.
Fig. 15 is an image indicating that the SLS function is working normally.
Fig. 16 is an image indicating a procedure for resetting the SLS value.
Fig. 17 is a hardware configuration diagram of an operating device according to one embodiment of the present disclosure.

### [Description of the Embodiment]

A robot (hereinafter, also referred to as a human-cooperative robot) can include an operating speed monitoring function that generates an error and thus stops the robot when the operating speed exceeds an upper speed limit value. Here, the expected environment resistance of a robot used in offices and the like is sometimes lower than the environment resistance of a robot expected to be used in factories and the like. The former robot, however, is easily carried and can be used by a user who is not familiar with robots. Therefore, the former robot is more likely than the latter robot to be used in an environment with a pollution degree higher than the pollution degree of an environment in which the robot has been expected to be used. That is, the monitoring function of the former robot may possibly be fail. According to one embodiment of the present disclosure, provided is an operating device that enables the confirmation of whether the monitoring function is working normally, when the pollution degree of an environment in which a human-cooperative robot is used is higher than the pollution degree of an expected environment.

Hereinafter, an operating device (hereinafter, also referred to as an operating apparatus) according to one embodiment of the present disclosure is described with reference to drawings. The operating device is used for the operation confirmation of an operating speed monitoring function in a primary-secondary robot system including a primary robot and a secondary robot.

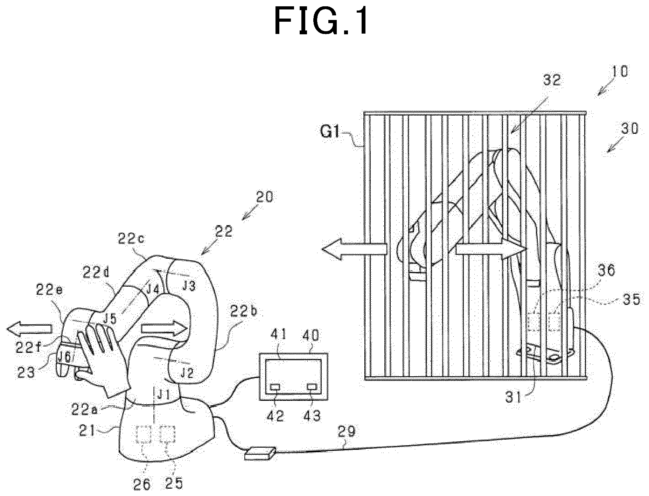

As illustrated in Fig. 1, a primary-secondary robot system 10 includes a primary robot 20 and a secondary robot 30. International Electrotechnical Commission (IEC) standards specify in IEC60664-1 pollution degrees of environments in which an apparatus is used. Pollution degree 1 refers to a clear-air environment such as a clean room. Pollution degree 2 refers to, for example, an environment for using an electric device in a control panel, a home electrical appliance, or a business machine. Pollution degree 3 refers to an environment in general factories and the like. Pollution degree 4 refers to, for example, an outdoor environment. The primary robot 20 is a human-cooperative robot that cooperates with a human and is expected to be used in an environment with pollution degree 2 (that is, a first pollution degree). The secondary robot 30 is an industrial robot expected to be used in an environment with pollution degree 3 (that is, a second pollution degree higher than the first pollution degree). That is, the pollution degree of the environment in which the primary robot 20 is used is lower than the pollution degree of the environment in which the secondary robot 30 is used. For example, when the primary robot 20 is used in an environment with a pollution degree higher than pollution degree 2, a substrate in the primary robot 20 may possibly cause a short circuit due to dust or the like, causing failure of a function of the primary robot 20.

The primary robot 20 (that is, a master robot) may be, for example, a 6-axis vertical articulated robot. The primary robot 20 includes a base 21 and an arm 22. The arm 22 includes a plurality of links. Two adjacent links of the plurality of links are relatively rotatably coupled with each other via a rotation axis (that is, a j oint). Each of the axes (that is, joints) is driven via a speed reducer or the like by a motor corresponding to the axis.

In detail, the primary robot 20 includes, on the base 21 (that is, a link), a shoulder 22a set via a first axis (that is, an axis J1) that is a rotation axis vertical to a setting surface. The shoulder 22a is coupled with the base 21 in a rotatable manner around the first axis as the center. The shoulder 22a (that is, a link) is coupled with a lower arm 22b that vertically extends, via a second axis (that is, an axis J2) that is a rotation axis in parallel with the setting surface and orthogonal to the first axis. The lower end of the lower arm 22b is coupled with the shoulder 22a in a rotatable manner around the second axis as the center. The upper end of the lower arm 22b (that is, a link) is coupled with a first upper arm 22c via a third axis (that is, an axis J3) that is a rotation axis in parallel with the setting surface and in parallel to the second axis. One of the two ends of the first upper arm 22c is coupled with the lower arm 22b in a rotatable manner around the third axis as the center.

The other end of the first upper arm 22c (that is, a link) is coupled with a second upper arm 22d via a fourth axis (that is, an axis J4) that is a rotation axis orthogonal to the third axis. One of the two ends of the second upper arm 22d is coupled with the first upper arm 22c in a rotatable manner around the fourth axis as the center. The other end of the second upper arm 22d (that is, a link) is coupled with a wrist 22e via a fifth axis (that is, an axis J5) that is a rotation axis orthogonal to the fourth axis. The wrist 22e is coupled with the second upper arm 22d in a rotatable manner around the fifth axis as the center. The wrist 22e (that is, a link) is coupled with a flange 22f via a sixth axis (that is, an axis J6) that is a rotation axis orthogonal to the fifth axis. The flange 22f is coupled with the wrist 22e in a rotatable manner around the sixth axis as the center.

A hand 23 is attached to the tip of the arm 22 (that is, the flange 22f (that is, a link)). The hand 23 may include, for example, a pair of claws. The hand 23 performs an opening and closing operation that increases and decreases the distance between the pair of claws.

The base 21 contains a storage 25 and a controller 26. The storage 25 stores various parameters such as an upper speed limit value described later. The controller 26 controls the operation of the primary robot 20 and the hand 23. The storage 25 and the controller 26 may be realized by a computer including a central processing unit (CPU), a read only memory (ROM), a random-access memory (RAM), a drive circuit, an input-output interface, and the like.

The axes J1 to J6 (that is, joints) of the primary robot 20 have respectively provided therein encoders (not illustrated) that detect the rotation angle (that is, rotational position) of the motors of the axes J1 to J6. That is, the encoders detect the position and the direction of a control point of the arm 22 (hereinafter, called the attitude of the arm 22). The control point can be selected from the center of the tip of the arm 22 (that is, the flange 22f) and the middle between the pair of claws of the hand 23 (that is, tool center position (TCP)).

The axes J1 to J6 of the primary robot 20 have brakes (not illustrated) provided therein. The brakes brake the axes J1 to J6, and limit the change of the rotation angle of the axes J1 to J6. In addition, the primary robot 20 includes an emergency stop button (not illustrated). When the emergency stop button is pressed, the primary robot 20 outputs to an operating device 40 an emergency stop signal indicating that the emergency stop button has been pressed.

The primary robot 20 includes an operating speed monitoring function. When the operating speed of the primary robot 20 exceeds an upper speed limit value, the monitoring function generates an error and thus stops the primary robot 20. When the rotation speed (that is, operating speed) of the axes J1 to J6 (that is, a plurality of axes) each having an upper speed limit value thereof set exceeds the upper speed limit value, the monitoring function generates an error and thus stops the primary robot 20. The rotation speeds of the axes J1 to J6 are calculated on the basis of the detection values of the encoders that detect the rotation angle of the axes J1 to J6. For example, due to a failure of the motors provided in the axes, a short circuit in a circuit for driving a motor, or the like, it may occur that the operating speed of the primary robot 20 exceeds an upper speed limit value.

The monitoring function includes a first monitoring function and a second monitoring function. When the operating speed of the primary robot 20 exceeds a first upper speed limit value, the first monitoring function generates a first error and thus stops the primary robot 20. The second monitoring function has lower reliability than the reliability of the first monitoring function, and generates a second error and thus stops the primary robot 20 when the operating speed of the primary robot 20 exceeds a second upper speed limit value. The primary robot 20 includes a safety-related section that is an electric control system related to safety, and a non-safety-related section other than the safety-related section. The safety-related section accepts an operation command from the non-safety-related section and operates the primary robot 20 only while recognizing a safety signal indicating safety. The first monitoring function is executed by the safety-related section. The second monitoring function is executed by the non-safety-related section. That is, the operation command based on the second monitoring function is not accepted by the safety-related section in some cases. In this case, the operation of the primary robot 20 is not stopped. Therefore, the reliability of the second monitoring function can be said to be lower than the reliability of the first monitoring function.

An initial value of the first upper speed limit value is higher than an initial value of the second upper speed limit value. Specifically, the axes J1 to J6 respectively have initial values of the first upper speed limit values higher than initial values of the second upper speed limit values of the axes J1 to J6. In addition, by an automatic setting function, the second upper speed limit value is automatically set to a value lower than the first upper speed limit value. Therefore, when the first upper speed limit value is lowered, the second upper speed limit value is automatically set to a value lower than the first upper speed limit value lowered. The operating speed of the primary robot 20 is usually lower than the second upper speed limit value.

The number of the first error and the number of the second error are different from each other. The number of the first error is a unique number indicating the output from the first monitoring function. The number of the second error is a unique number indicating the output from the second monitoring function.

The controller 26 controls the attitude of the arm 22 according to the external force acting on the arm 22. In detail, the controller 26 generates, in the motors corresponding to the axes, torque compensating only the gravity and the frictional force acting on the arm 22. The controller 26 operates the arm 22 according to the external force. That is, a flexible control is performed. The controller 26 holds the attitude of the arm 22 on which the external force has not acted. That is, the primary robot 20 changes the attitude of the arm 22 according to the external force applied by the user, and holds the attitude when the external force does not act. In the present embodiment, by using a direct teaching mode, the user can directly grasp the arm 22 and change the attitude of the arm 22, or can make the primary robot 20 hold the attitude of the arm 22. The controller 26 transmits, to a controller 36 of the secondary robot 30, detection results of the encoders in the axes J1 to J6 of the primary robot 20.

The primary robot 20 is connected to the secondary robot 30 through a cable 29. The secondary robot 30 (that is, a slave robot) may be, for example, the same type (for example, a 6-axis vertical articulated type) of robot as the primary robot 20 but larger than the primary robot 20. The secondary robot 30 is installed within a safety fence G1. The secondary robot 30 has the same configuration as the configuration of the primary robot 20 except that the secondary robot 30 is larger than the primary robot 20 and is slightly different in shape from the primary robot 20. Specifically, the secondary robot 30 includes a base 31 and an arm 32. A hand (not illustrated) is attached to the tip of the arm 32. Axes (that is, corresponding axes) of the secondary robot 30 correspond to the axes J1 to J6 of the primary robot 20.

The base 31 contains a storage 35 and a controller 36. The controller 36 controls the operation of the secondary robot 30 and the hand. The storage 35 and the controller 36 may be realized by a computer including a CPU, a ROM, a RAM, a drive circuit, an input-output interface, and the like. The controllers 26 and 36 are communicable via the cable 29 and transmit information to and receive information from each other.

The axes (that is, joints) of the secondary robot 30 have provided therein encoders (not illustrated) that detect the rotation angle of the axes. That is, the encoders detect the position and the direction of a control point of the arm 32 (hereinafter, called the attitude of the arm 32). The control point can be selected from the center of the tip of the arm 32 and the middle between a pair of claws of the hand (that is, TCP).

The axes of the secondary robot 30 have brakes (not illustrated) provided therein. The brakes brake the axes, and limit the change of the angle of the axes.

The controller 36 controls motors corresponding to the axes of the secondary robot 30 so that the angle of the axes (that is, joints) of the secondary robot 30 coincides with the angle of the corresponding axes (that is, joints) of the primary robot 20. That is, the controller 36 causes the attitude of the secondary robot 30 to coincide with the attitude of the primary robot 20 in response to the operation performed by the user in which external force is applied to the primary robot 20 and the attitude of the primary robot 20 is thereby changed. As described above, in a primary-secondary robot function, the attitude of the primary robot 20 is changed by external force applied by a user, and the attitude of the secondary robot 30 is controlled so that the attitude of the secondary robot 30 coincides with the attitude of the primary robot 20. The primary robot 20 can execute the primary-secondary robot function (primary-secondary robot operating mode).

In detail, the controller 36 controls, by a feedback control, the motors corresponding to the axes of the secondary robot 30 on the basis of the detection results of the encoders in the axes of the primary robot 20 and the encoders in the axes of the secondary robot 30. That is, the axes of the secondary robot 30 follow the motion of the axes of the primary robot 20. The controller 36 transmits, to the controller 26 of the primary robot 20, the detection results of the encoders in the axes of the secondary robot 30. The controller 26 of the primary robot 20 and the controller 36 of the secondary robot 30 constitute a controller of the primary-secondary robot system 10.

The execution of the primary-secondary robot operating mode causes the angle of the axes of the secondary robot 30 to coincide with the angle of the axes of the primary robot 20.

The primary robot 20 is connected to the operating device 40. The operating device 40 (also referred to as a device for confirming the operating speed monitoring function of the human-cooperative robot) may be, for example, a teaching pendant, a tablet terminal, a smartphone, a laptop personal computer (PC), a desktop PC, or the like. The operating device 40 includes a display 41. The display 41 includes a touch panel that accepts a touch operation by the user and displays information. The operating device 40 has installed therein a control program for controlling the primary-secondary robot system 10. By executing the control program, the operating device 40 allows the user to control the primary-secondary robot system 10. For example, the operating device 40 operates, in a manual mode, the primary robot 20 via the controller 26 by a manual operation of the user. Alternatively, the operating device 40 may operate the primary robot 20 via the controller 26 by executing an operation program obtained through teaching.

The operating device 40 includes an enable button 42 and a forward button 43 (that is, two sections to be operated) that are displayed on the display 41. The operating device 40 permits a manual operation of the primary robot 20 only while the enable button 42 and the forward button 43 are pressed (that is, operated) by the user. The operating device 40 stops the primary robot 20 while at least one of the enable button 42 and the forward button 43 is not pressed. The enable button 42 and the forward button 43 may be physical configurations provided on the operating device 40. For example, in place of the enable button 42, an enable switch (not illustrated) may be provided on the backside of the operating device 40.

By executing the control program, the operating device 40 enables the user to set and confirm the primary-secondary robot system 10. The control program (also referred to as a program for confirming the operating speed monitoring function of the human-cooperative robot) causes the computer to execute the following processing. For example, setting of enabling and disabling the primary-secondary robot function, setting of a safely-limited speed (SLS) value (that is, the first upper speed limit value), operation confirmation of the emergency stop function, and operation confirmation of an SLS function (that is, the first monitoring function).

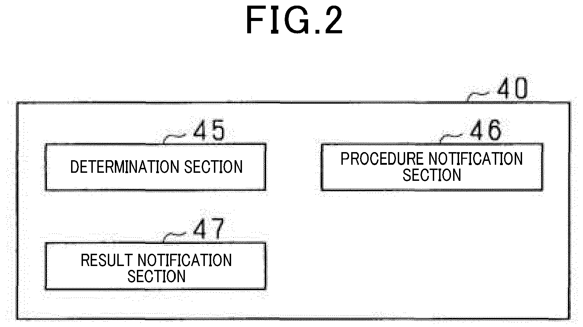

As illustrated in Fig. 2, the operating device 40 includes a determination section 45, a procedure notification section 46, and a result notification section 47. By executing the control program, the operating device 40 realizes the functions of the determination section 45, the procedure notification section 46, and the result notification section 47. The determination section 45 determines whether the use in pollution has occurred. The use in pollution means using the primary robot 20 in an environment with a pollution degree higher than a prescribed pollution degree. When the determination section 45 determines that the use in pollution has occurred, the procedure notification section 46 causes the display 41 to display an image indicating a procedure (hereinafter, also referred to as a confirmation procedure) for confirming whether the SLS function (that is, the operating speed monitoring function) is working normally. On the basis of the result of an operation of the primary robot 20 directed according to the confirmation procedure, the result notification section 47 causes the display 41 to display an image indicating whether the SLS function is working normally.

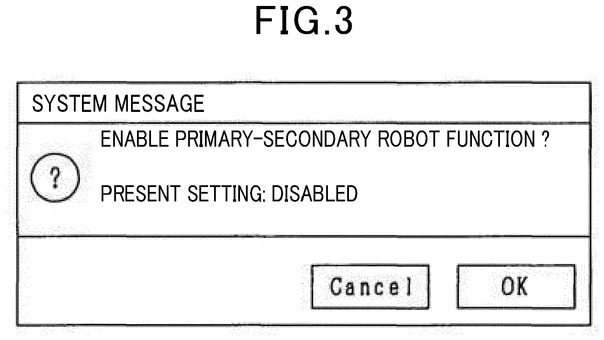

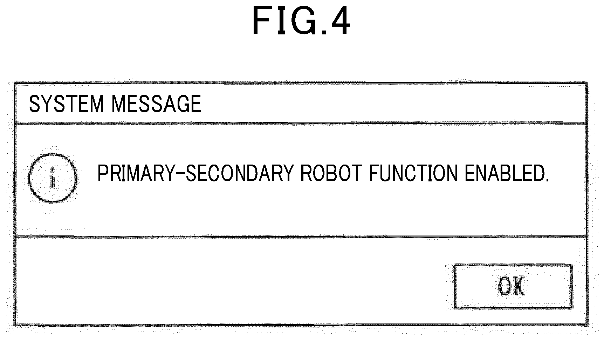

According to the image for enabling the primary-secondary robot function as illustrated in Fig. 3, the user performs an operation of enabling the function. According to the operation, the operating device 40 enables the primary-secondary robot function. Then, the operating device 40 causes the display 41 to display, as illustrated in Fig. 4, an image indicating that the primary-secondary robot function has been enabled.

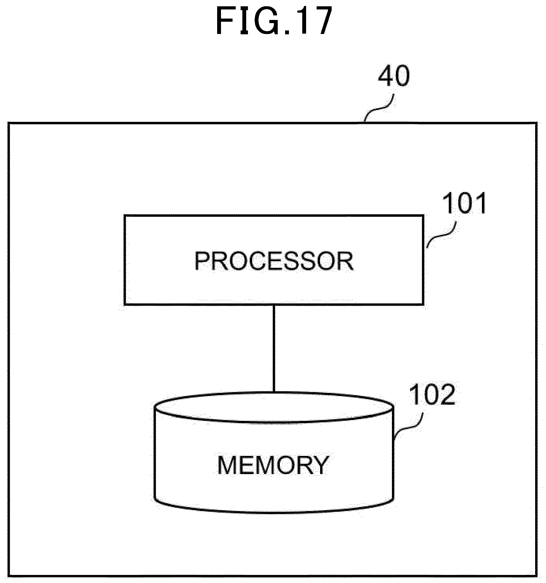

As illustrated in Fig. 17, the operating device 40 may include a processor 101 such as a CPU, and a memory 102 such as a ROM and a RAM. By the processor 101 executing a program (for example, the control program described above) stored in the memory 102, the processing of the determination section 45, the procedure notification section 46, the result notification section 47, and the like may be realized.

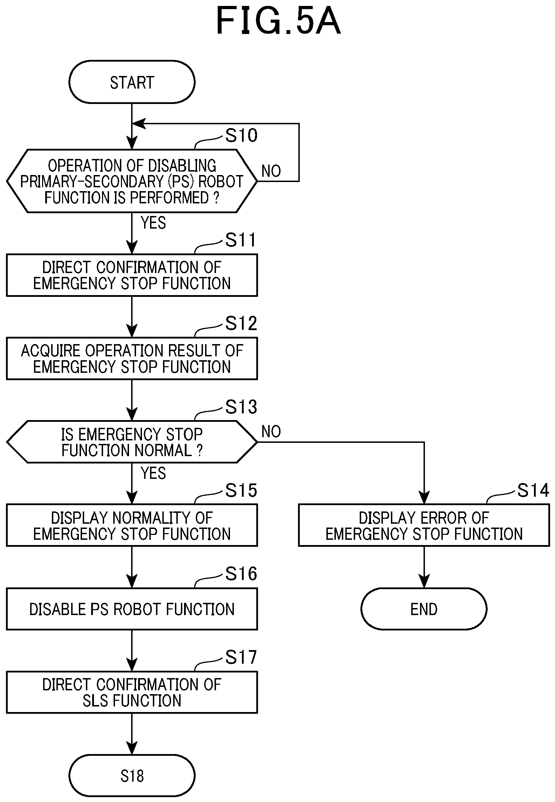

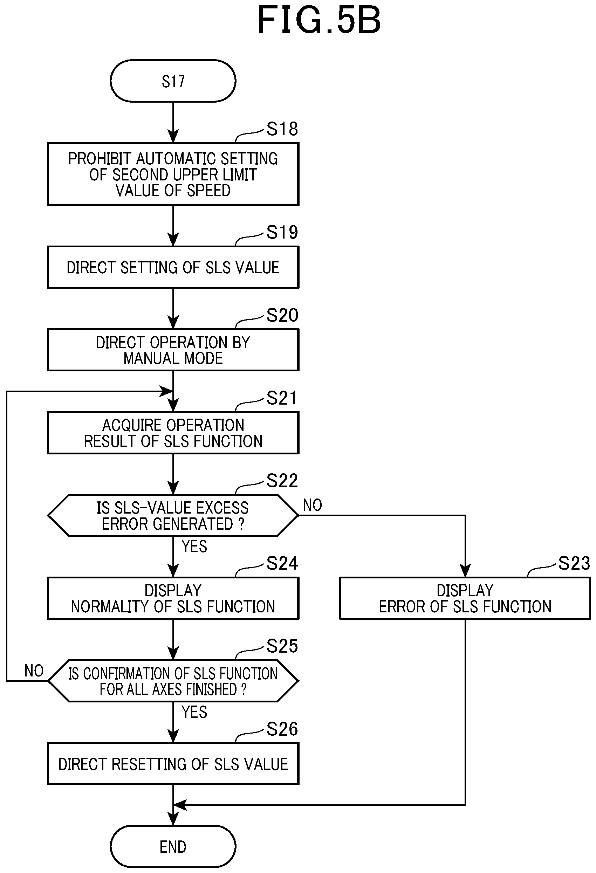

Fig. 5 is flowcharts illustrating processing of the operating device 40. The processing is started with the primary-secondary robot operating mode executed, that is, with the primary-secondary robot function enabled.

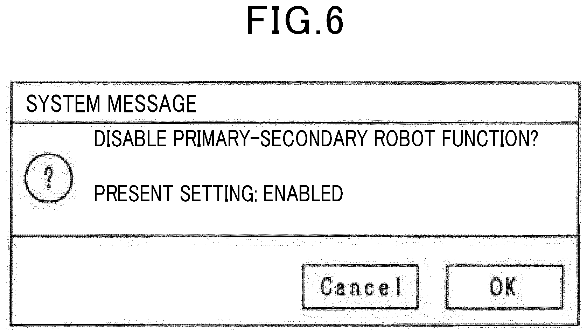

First, the operating device 40 determines whether an operation of disabling the primary-secondary robot function has occurred (S10). Specifically, the operating device 40 determines whether the user has performed a disabling operation in an image for disabling the primary-secondary robot function as illustrated in Fig. 6. That is, by the execution of the primary-secondary robot operating mode, it is determined whether the primary robot 20 has been used in an environment with pollution degree 3 that is higher than pollution degree 2 (that is, a prescribed pollution degree) (that is, whether the use in pollution has occurred). In a case where the execution of the primary-secondary robot function has been finished, it is determined that the use in pollution has occurred. For example, the operation of disabling the primary-secondary robot function may correspond to the finish of the function. When the user touches the OK button in the image of Fig. 6, it is determined that the disabling operation has been performed. In a case where it is determined that the operation of disabling the primary-secondary robot function has not been performed (S10: NO), the determination of S10 is repeated.

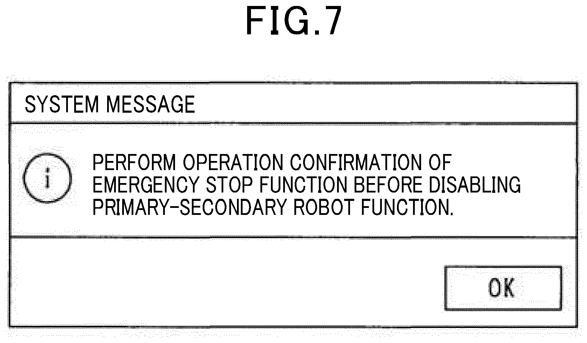

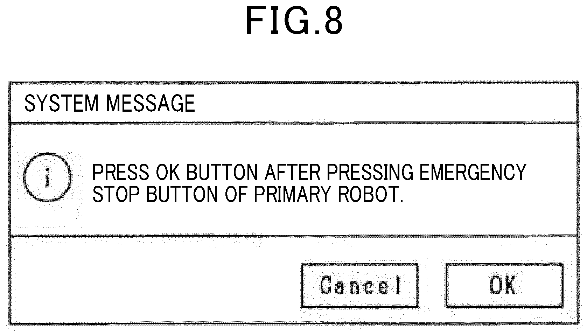

On the other hand, in a case where it is determined in the determination of S10 that the operation of disabling the primary-secondary robot function has occurred (S10: YES), the operating device 40 displays on the display 41 an image directing the operation confirmation of the emergency stop function (S11). Specifically, the display 41 displays, as illustrated in Fig. 7, an image directing the operation confirmation of the emergency stop function before disabling the primary-secondary robot function. When the user touches the OK button in the image of Fig. 7, the display 41 displays, as illustrated in Fig. 8, an image indicating a procedure for confirming the operation of the emergency stop function.

Subsequently, the operating device 40 acquires an operation result of the emergency stop function (S12). The user directs the primary robot 20 to operate the emergency stop function. Specifically, the user presses the emergency stop button of the primary robot 20, and then touches the OK button in the image of Fig. 8. When the OK button is touched, the operating device 40 acquires from the primary robot 20 an operation result of the emergency stop function.

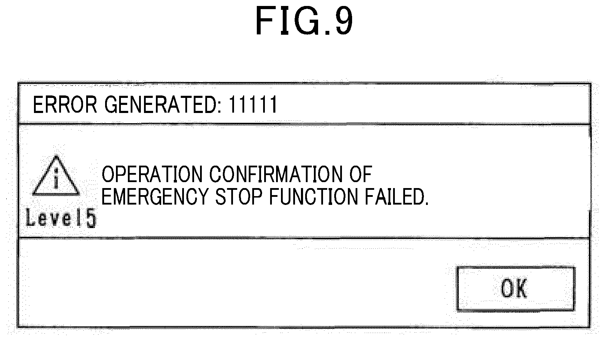

Subsequently, the operating device 40 determines whether the emergency stop function is working normally (S13). Specifically, the operating device 40 determines that the emergency stop function is working normally, when an emergency stop signal is output from the primary robot 20. The emergency stop signal indicates that the emergency stop button has been pressed. The operating device 40 determines that the emergency stop function is not working normally, when the emergency stop signal is not output. The operating device 40 acquires, as the operation result of the emergency stop function, the emergency stop signal output by the primary robot 20. In a case where it is determined that the emergency stop function is not working normally (S13: NO), the operating device 40 causes the display 41 to display an image indicating an error of the emergency stop function (S14). Specifically, the operating device 40 causes the display 41 to display, as illustrated in Fig. 9, the fact that the confirmation of the emergency stop function has failed, and error number 11111 corresponding to the error of the emergency stop function. The operating device 40 may confirm the error of the emergency stop function and move the processing to S14 in a case where the processing is returned to S11 after the determination in the processing of S13 is once NO, and the determination in the processing of S13 is once again NO. After the processing of S14, the operating device 40 finishes the processing. In this case, the operating device 40 stores as an error log (that is, an error history) data indicating the generation of the error and the contents of the error.

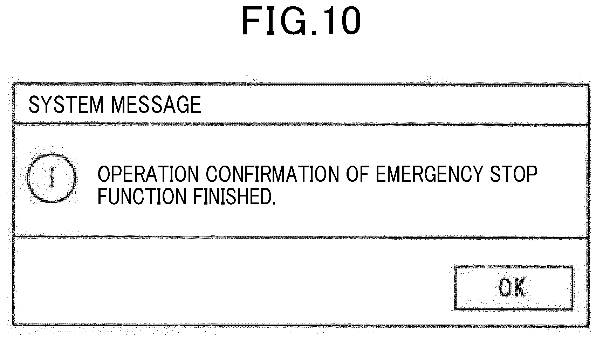

On the other hand, in a case where it is determined in the process of S13 that the emergency stop function is working normally (S13: YES), the operating device 40 causes the display 41 to display, as illustrated in Fig. 10, an image indicating that the emergency stop function is working normally (S15).

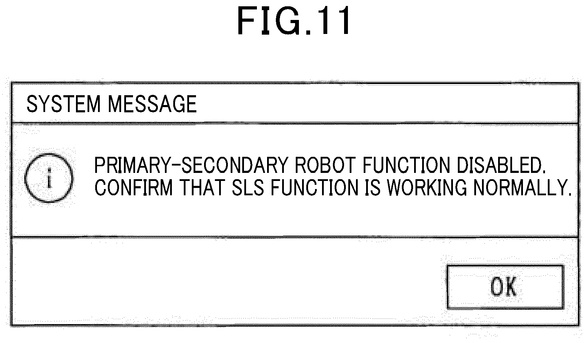

Subsequently, the operating device 40 disables the primary-secondary robot function (S16). Specifically, the operating device 40 finishes the primary-secondary robot operating mode. Thereby, the primary robot 20 can move on to an operating mode other than the primary-secondary robot operating mode. The primary robot 20, however, is prohibited from moving on to an operating mode other than the manual mode. That is, the primary robot 20 can move on only to the manual mode. The operating device 40 displays an image directing the operation confirmation of the SLS function (S17). Specifically, the operating device 40 causes the display 41 to display, as illustrated in Fig. 11, an image directing the operation confirmation of the SLS function, simultaneously with disabling the primary-secondary robot function. The operating device 40 turns off the automatic setting function (S18). That is, the second upper speed limit value is prohibited from being automatically set to be lower than the SLS value. The automatic setting function automatically sets the second upper speed limit value to be lower than the SLS value. Due to this prohibition, even when the SLS value is lowered, the second upper speed limit value is prevented from being automatically set to be lower than the lowered SLS value. The second upper speed limit value is set to a value at the time when the primary robot 20 was shipped from the factory (hereinafter, also referred to as a default value).

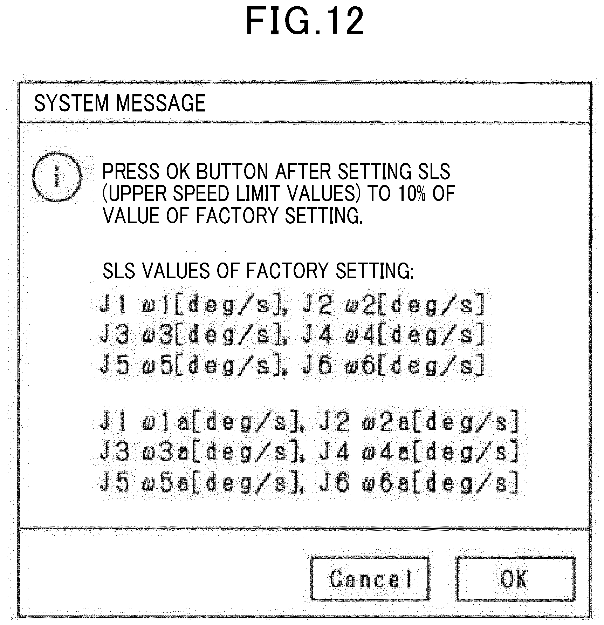

When the user touches the OK button in the image of Fig. 11, the display 41 displays, as illustrated in Fig. 12, an image indicating a procedure for setting the SLS value (S19). The image of Fig. 12 may include, for example, a direction for setting the SLS value to 10% of the value at the time of factory shipment (that is, a default value). 10% of the default value is a lower limit value settable as the SLS value. The image of Fig 12 indicates default values ω1 to ω6 (deg/s) for the SLS values of the axes J1 to J6, and SLS values ω1a to ω6a (deg/s) to be set for the axes J1 to J6 (that is, settable lower limit values).

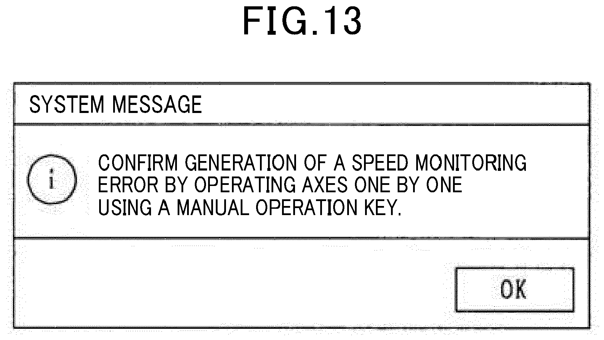

Subsequently, the operating device 40 displays an image directing the operation of the primary robot 20 by the manual mode in the operation confirmation of the SLS function (S20). Specifically, the display 41 displays, as illustrated in Fig. 13, an image directing that the axes are operated one by one by a manual operation key (not illustrated). The speed at which the axes J1 to J6 are operated may be set to a speed higher than the SLS value set to the lower limit value. The speed at which the axes J1 to J6 are operated may be automatically set by the operating device 40, or may be set by the user.

Subsequently, the operating device 40 acquires an operation result of the SLS function (S21). The user operates a single axis by the manual mode. Specifically, the user operates one of the axes J1 to J6 by operating the manual operation key. During operation, the operating device 40 permits the operation of the primary robot 20 only while the user presses both the enable button 42 and the forward button 43. The operating device 40 stops the primary robot 20 while at least one of the enable button 42 and the forward button 43 is not pressed. When an error of the SLS function is generated during operation, the operating device 40 acquires an operation result of the SLS function from the primary robot 20.

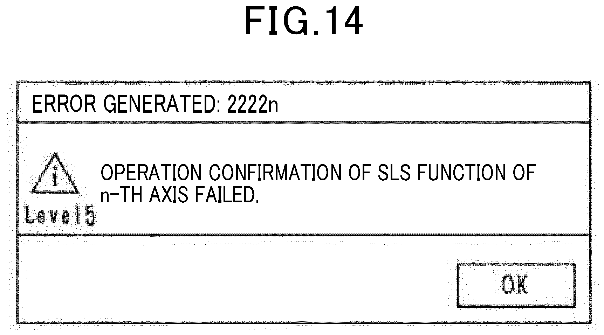

Subsequently, the operating device 40 determines whether an SLS-value excess error has been generated (S22). Specifically, the operating device 40 determines whether the SLS function (that is, the first monitoring function) of the primary robot 20 has generated the first error and stopped the primary robot 20. This determination is made while the axes J1 to J6 are rotated to determination operation angles (that is, prescribed angles) respectively set to the axes J1 to J6. The determination operation angles are set to, for example, about three times the rotation angles of the axes J1 to J6 when the first error is generated. The user understands these determination operation angles from a manual or the like. The user rotates the axes J1 to J6 to the determination operation angles until the first error is generated. The operating device 40 acquires, as the operation result of the SLS function, the first error generated in the primary robot 20. In a case where it is determined that the SLS-value excess error has not been generated (S22: NO), the operating device 40 causes the display 41 to display an image indicating an error of the SLS function (S23). For example, in a case where the user has manually operated the n-th axis, the operating device 40 causes the display 41 to display, as illustrated in Fig. 14, the fact that the confirmation of the SLS function of the n-th axis has failed, and error number 2222n corresponding to the error of the SLS function of the n-th axis. Thereafter, the operating device 40 finishes the processing. In this case, the operating device 40 stores as an error log (that is, an error history) data indicating the generation of the error and the contents of the error.

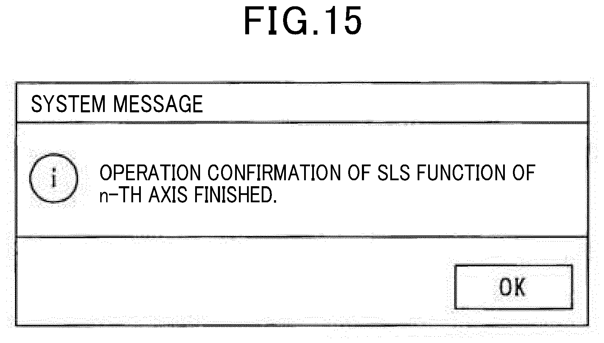

On the other hand, in a case where it is determined in the processing of S22 that the SLS-value excess error has been generated (S22: YES), the operating device 40 causes the display 41 to display, as illustrated in Fig. 15, an image indicating that the SLS function for the n-th axis is working normally (S24).

Subsequently, the operating device 40 determines whether the operation confirmation of the SLS function has been finished for all the axes (S25). Specifically, when all the axes have generated the SLS-value excess error, the operating device 40 determines that the operation confirmation of the SLS function has been finished for all the axes. In a case where it is determined that the operation confirmation of the SLS function has not been finished for all the axes (S25: NO), the operating device 40 returns the processing to S21. In the processing of S21, the user operates, by operating the manual operation key, one axis having not been operated among the axes J1 to J6. The operating device 40 causes the display 41 to display an image indicating a procedure for confirming whether the SLS function (that is, the operating speed monitoring function) is working normally by driving the axes J1 to J6 (that is, a plurality of axes) of the primary robot 20 one by one.

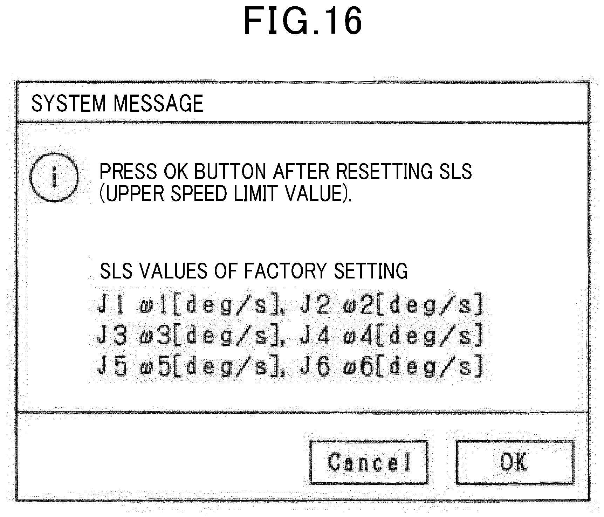

On the other hand, in a case where it is determined in the process of S25 that the operation confirmation of the SLS function has been finished for all the axes (S25: YES), the operating device 40 causes the display 41 to display, as illustrated in Fig. 16, an image indicating a procedure for resetting the SLS values (S26). The image of Fig. 16 includes a direction for resetting the SLS value. The image of Fig. 16 indicates the default values ω1 to ω6 (deg/s) for the SLS values of the axes J1 to J6. When the user resets the SLS value, the operating device 40 turns on the automatic setting function. That is, the prohibition of automatically setting the second upper speed limit value to be lower than the SLS value is cancelled. Further, the prohibition of moving on to an operating mode other than the manual mode is cancelled. Thereafter, the operating device 40 finishes the processing. The operating device 40 stores as an operation log (that is, an operation history) data indicating that the emergency stop function is working normally and that the SLS function is working normally.

The processing of S10 may be performed by the determination section 45, the processing of S17, S19, and S20 may be performed by the procedure notification section 46, and the processing of S22 to S24 may be performed by the result notification section 47.

The present embodiment has the following advantages.
(1) The display 41 displays an image. The determination section 45 determines whether the primary robot 20 has been used in an environment with pollution degree 3 higher than pollution degree 2 (that is, a prescribed pollution degree) (that is, whether the use in pollution has occurred). In a case where the determination section 45 determines that the use in pollution has occurred, the procedure notification section 46 causes the display 41 to display an image (for example, the images of Figs. 11 to 13) indicating a procedure for confirming whether the SLS function (that is, the operating speed monitoring function) is working normally. Therefore, the user can confirm the SLS function according to the image displayed on the display 41 and indicating a confirmation procedure. The confirmation procedure may include setting the upper speed limit value to be lower than a usual operating speed, and operating the human-cooperative robot at the usual operating speed. Alternatively, the confirmation procedure may include instantaneously operating the human-cooperative robot at an operating speed exceeding the upper speed limit value. Thereby, it is possible to confirm whether the operating speed monitoring function normally works. On the basis of the result of an operation performed according to the confirmation procedure, the result notification section 47 causes the display 41 to display an image (for example, the images of Figs. 14 and 15) indicating whether the SLS function is working normally. Therefore, by the image displayed on the display 41 and indicating whether the SLS function is working normally, the user can confirm whether the SLS function is working normally. Accordingly, in a case where the human-cooperative robot is used in an environment with a pollution degree higher than the pollution degree of an expected environment, it is possible to confirm whether the SLS function is working normally.
(2) The determination section 45 performs determination on the bases of an operating mode of the human-cooperative robot. Specifically, in a case where the primary-secondary robot function is switched from enabled to disabled (or the execution of the primary-secondary robot function is finished), the determination section 45 determines that the use in pollution has occurred. When the primary-secondary robot function is enabled, the primary robot 20 (that is, a human-cooperative robot) is carried to a use environment of the secondary robot 30 (that is, an industrial robot). Therefore, the human-cooperative robot comes to be used in an environment with a pollution degree higher than a prescribed pollution degree. Accordingly, for the determination of the use in pollution, the user does not have to input, for example, the environment in which the primary robot 20 has been used. That is, it is possible to confirm, by the execution of the primary-secondary robot function, whether the SLS function is working normally, in a case where the primary robot 20 has been used in an environment with pollution degree 3 which is higher than pollution degree 2.
(3) The procedure notification section 46 turns off the automatic setting function when causing the display 41 to display an image indicating a procedure for confirming whether the SLS function (that is, the first monitoring function) is working normally. That is, the second upper speed limit value is prohibited from being automatically set to be lower than the SLS value (that is, the first upper speed limit value). Here, with the automatic setting function turned on, the operating speed of the human-cooperative robot comes to exceed the second upper speed limit value prior to the first upper speed limit value. Therefore, the second operating speed monitoring function works and stops the human-cooperative robot at the time when the operating speed of the human-cooperative robot exceeds the second upper speed limit value, and the confirmation of whether the first operating speed monitoring function is normal may not possibly be made. According to the operation of the procedure notification section 46 described above, however, the SLS value can be set to be lower than the second upper speed limit value. By the user operating the primary robot 20 according to the procedure for confirming whether the SLS function is working normally, the user can confirm whether the SLS function is working normally. It is possible to avoid a situation in which, at the time when the operating speed of the primary robot 20 exceeds the second upper speed limit value, the second monitoring function stops the primary robot 20, preventing the confirmation of whether the SLS function is working normally.
(4) It is considered that the confirmation of whether the SLS function (operating speed monitoring function) is working normally is performed by driving a plurality of axes simultaneously. The primary robot 20 continues to operate until the operating speed of axes for which the SLS function is working normally exceeds the SLS value (That is, upper speed limit value). When the operating speed of axes exceeds the SLS value, the primary robot 20 is stopped. In a case where the SLS function for some of axes has failed, but the SLS function for other axes is working normally, however, the primary robot is stopped. That is, it may be overlooked that the SLS function for some of the plurality of axes has failed. The procedure notification section 46 causes the display 41 to display an image (for example, Fig. 13) indicating a procedure for causing user to confirm whether the SLS function is working normally by driving the plurality of axes of the primary robot 20 one by one. This can prevent a failure of the SLS function for some of the plurality of axes from being overlooked.
(5) The procedure notification section 46 causes the display 41 to display an image (for example, the image of Fig. 12) indicating a confirmation procedure including setting the SLS value to 10% of a default value (for example, a settable lower limit value). Thereby, because the operating speed exceeds the SLS value even when the operating speed of the primary robot 20 is low, it is possible to safely confirm whether the SLS function is working normally.
(6) The operating device 40 includes the enable button 42 and the forward button 43 (that is, two sections to be operated) that need to be simultaneously operated by the user for the operation of the primary robot 20. In a case where at least one of the enable button 42 and the forward button 43 is not operated when the procedure notification section 46 causes the display 41 to display an image (for example, the images of Figs. 11 to 13) indicating a confirmation procedure, the procedure notification section 46 stops the primary robot 20. Thereby, even when the primary robot 20 is, due to a failure of the SLS function, not stopped by the operation performed according to the confirmation procedure, the user can immediately stop the primary robot 20 by stopping the operation of at least one of the enable button 42 and the forward button 43. For example, the user may stop the primary robot 20 by releasing at least one of the enable button 42 and the forward button 43.

The embodiment may be modified as follows. Components identical to those of the embodiment are denoted by the identical reference signs and thus not described.
(a) The user may operate the primary robot 20 without the enable button 42 and only with the forward button 43.
(b) In place of the processing of S20 and S21 in Fig. 5, the operating device 40 may, without an operation by the user, set the speed at which the axes J1 to J6 are operated to higher than the SLS value set to the settable lower limit value and operate the axes J1 to J6 one by one. That is, the operation confirmation of the SLS function may be automated.
(c) The procedure notification section 46 may cause the display 41 to display an image indicating a confirmation procedure for causing the user to set the SLS value to a value, such as 20% of a default value, other than a settable lower limit value. The operating device 40 may by itself set or cause the user to set the operating speed of the primary robot 20 to an operating speed exceeding the SLS value.
(d) In the operating device 40, the function for automatically setting the second upper speed limit value to be lower than the first upper speed limit value (that is, the automatic setting function) may be omitted.
(e) The determination section 45 may determine whether the use in pollution has occurred, on the basis of the environment input by the user in which the primary robot 20 has been used. Alternatively, the determination section 45 may determine whether the use in pollution has occurred, on the basis of the pollution degree of the environment input by the user in which the primary robot 20 has been used. The use in pollution may correspond not only the use of the primary-secondary robot operating mode, but also the use of another operating mode with which the primary robot 20 has been used in an environment with a pollution degree higher than a prescribed pollution degree. In a case where the determination section 45 determines that the use in pollution has occurred, the operating device 40 may execute the processing of S11 and the following processing in Fig. 5.
(f) The prescribed pollution degree expected as the pollution degree of the environment in which the primary robot 20 is used is not limited to pollution degree 2, but may be, for example, pollution degree 1. Further, the prescribed pollution degree is not limited to the pollution degree specified in IEC standards, but may be a pollution degree specified in other standards, or may be a pollution degree uniquely specified by the user.
(g) The operating device 40 can also confirm whether the second monitoring function is working normally. Specifically, the operating device 40 may perform the processing of the flowchart in Fig. 5 for the second monitoring function in place of the SLS function. For example, with respect to the second upper speed limit value in place of the SLS value (that is, the first upper speed limit value), the same processing may be executed as the processing for the SLS value. In this case, the processing of S18 may be omitted. The primary robot 20 may include only one of the SLS function (that is, the first monitoring function) and the second monitoring function. In this case, the operating device 40 may confirm whether only the monitoring function included is working normally.
(h) The functions of the controllers 26 and 36 may be realized by one controller. The one controller is provided in the primary robot 20 or the secondary robot 30, and controls the primary robot 20 and the secondary robot 30.
(i) The primary robot 20 and the secondary robot 30 may have an identical shape but different sizes. Alternatively, the primary robot 20 and the secondary robot 30 may have an identical shape and identical size.
(j) The program for causing the computer to execute the processing of the operating speed monitoring function of the primary robot 20 (that is, the human-cooperative robot) may be stored in a non-transitory tangible computer-readable storage medium (that is, a storage medium).

The embodiment and a modified example thereof may be combined as appropriate.

## Claims

1. An operating device (40) connected to a robot (20) including a monitoring function that stops the robot in a case where an operating speed of the robot exceeds an upper speed limit value, the robot being controlled by a human, the operating device comprising:
a display (41) that displays an image;
a determination section (45) that determines whether a second pollution degree that is a pollution degree of an environment in which the robot has been used is higher than a first pollution degree that is a pollution degree set for the robot;
a first notification section (46) that causes the display to display an image indicating a procedure for confirming whether the monitoring function is working normally, in a case where the second pollution degree is determined to be higher than the first pollution degree; and
a second notification section (47) that acquires from the robot a result of an operation of the robot directed according to the procedure, and, on the basis of the operation result acquired, causes the display to display an image indicating whether the monitoring function is working normally.

2. The operating device according to claim 1, wherein
the robot has a primary-secondary robot function in which an attitude of the robot is changed by external force applied by a user, and an attitude of a secondary robot (30) is controlled so that the attitude of the secondary robot coincides with the attitude of the robot as a primary robot,
the first pollution degree is lower than a pollution degree of an environment in which the secondary robot is used,
the second pollution degree is the pollution degree of the environment in which the secondary robot is used, and
the determination section determines whether the second pollution degree is higher than the first pollution degree, when an operation of the primary-secondary robot function is finished.

3. The operating device according to claim 1 or 2, wherein
as the upper speed limit value, a first upper speed limit value and a second upper speed limit value are set,
the second upper speed limit value is set to be lower than the first upper speed limit value by an automatic setting function,
the monitoring function includes a first monitoring function that stops the robot when the operating speed of the robot exceeds the first upper speed limit value, and a second monitoring function that has lower reliability than reliability of the first monitoring function, and stops the robot when the operating speed of the robot exceeds the second upper speed limit value, and
the first notification section turns off the automatic setting function when causing the display to display the image indicating a procedure.

4. The operating device according to claim 1 or 2, wherein
the robot includes a plurality of links (21 and 22a to 22f) coupled with each other and a plurality of axes (J1 to J6) that relatively rotate adjacent links of the plurality of links,
the monitoring function stops the robot when any of operating speeds of the plurality of axes each having an upper speed limit value thereof set exceeds the upper speed limit value,
the procedure includes driving the plurality of axes of the robot one by one, and
the second notification section acquires the operation result of each of the plurality of axes, and, on the basis of the operation result acquired, causes the display to display an image indicating whether the monitoring function is working normally.

5. The operating device according to claim 1 or 2, wherein
the procedure includes setting the upper speed limit value to a settable lower limit value.

6. The operating device according to claim 1 or 2, comprising two sections to be operated (42, 43) for operating the robot, wherein
after the image indicating a procedure is displayed on the display, the robot is stopped while at least one of the two sections is not operated.

7. A program of a computer connected to a robot (20) including a monitoring function that stops the robot in a case where an operating speed of the robot exceeds an upper speed limit value, the robot being controlled by a human, the program causing the computer to execute:
determining whether a second pollution degree that is a pollution degree of an environment in which the robot has been used is higher than a first pollution degree that is a pollution degree set for the robot;
causing a display (41) to display an image indicating a procedure for confirming whether the monitoring function is working normally, in a case where the second pollution degree is determined to be higher than the first pollution degree;
acquiring from the robot a result of an operation of the robot directed according to the procedure; and
on the basis of the operation result acquired, causing the display to display an image indicating whether the monitoring function is working normally.
